# EUROPEAN PATENT SPECIFICATION

(11) **EP 3 483 692 B1**
(45) Date of publication and mention of the grant of the patent: **28.04.2021**
(21) Application number: 17201515.8
(22) Date of filing: 14.11.2017
(51) Int. Cl.: G05D 16/06, F16K 11/076, F24F 11/80

(54) **A DIFFERENTIAL PRESSURE CONTROL VALVE**
DIFFERENZIALDRUCKREGELVENTIL
VANNE DE CONTRÔLE DE LA PRESSION DIFFÉRENTIELLE

(43) Date of publication of application: 15.05.2019
(73) Proprietor: FRESE A/S, 4200 Slagelse (DK)
(72) Inventor: RASMUSSEN, Christian Bo, 5230 Odense M (DK)
(74) Representative: AWA Denmark A/S

(56) References cited:
- EP-A1- 1 529 994
- CN-B- 101 666 386
- DE-A1- 3 445 476
- DE-A1-102009 014 048

## Description

The present invention relates to a control valve for selectively regulating a fluid flow to a device, such as a heating or cooling convector, and capable of holding a differential pressure regulator.

### Background of the invention

Control valves such as three-way valves are often used in fluid systems comprising several fluid sources which need to be selectively coupled to a receiving device. An example of such systems is large Heating, Ventilation, and Air Condition (HVAC) systems used for controlling the indoor climate of buildings. Large HVAC systems often comprise one or more heating and cooling convectors coupled to a central source of heating and cooling fluid, each device being coupled to the two fluid sources by a control valve such that the device may be selectively coupled to the hot or the cold fluid source depending whether the device is required to heat or cool.

Many HVAC systems further use the control valve to regulate the flow rate to the device by adjusting the inlet area, whereby a desired flow rate can be selected. However, as the flow rate depends not only on the inlet area but also on the expected pump pressure, such systems may be unreliable due to pressure fluctuations caused by varying loads or lag time in the pump. Such pressure fluctuations may cause the system to suffer from irregular flow, as the control valve is unable to compensate for varying pressure.

In order to mitigate the effects of pressure fluctuations, modern HVAC systems may be provided with a Pressure Independent Control Valve (PICV) arranged downstream of the control valve. PICVs are capable of both regulating the flow rate by adjusting the size of an inlet area and maintain a substantially constant differential pressure over the inlet area, whereby the desired flow to the device is achieved despite pressure fluctuations in the system. As a result, such systems may be run at lower pump pressures, whereby energy consumption and running costs are reduced, and noise generated by the pump of the system is lowered.

While the reduced running cost may justify using two valves to regulate the flow and differential pressure for each device connected to the system, the initial cost of the system is significantly increased due to the additional valve used for each connected device. Furthermore, installation of the system is made more complex, thus increasing installation time

DE 10 2009 014 048 A1 (SCHAEFFLER TECHNOLOGIES GMBH [DE]) 23 September 2010 (23.09.2010) shows a valve with two inlets and one outlet and a plunger that can be rotated and translated for selecting which one of the two inlets is put in connection with the outlet.

On this background it is an object of the invention to provide a control valve capable of selectably connecting a fluid source to a device while regulating the flow and differential pressure through the valve.

### Summary of the invention

According to a first aspect of the invention, these and other object are solved by a control valve for selectively regulating a fluid flow to a de-vice, such as a heating or cooling convector, said control valve comprising a first inlet adapted to be connected to a first fluid source, a second inlet adapted to be connected to a second fluid source, an outlet adapted to be connected to the device, an inlet selection element arranged downstream of the first and the second inlets and upstream of the outlet, wherein said inlet selection element is moveable between a first position in which the first inlet is in fluid communication with the outlet and a second position in which the second inlet is in fluid communication with the outlet, a regulator cavity adapted to accommodate a differential pressure regulator, said regulator cavity being arranged downstream of the inlet selection element and upstream of the outlet, a first fluid passage in fluid communication with the first inlet, and a second fluid passage in fluid communication with the second inlet, wherein the first fluid passage is in fluid communication with the regulator cavity when the inlet selection element connects the first inlet to the outlet and the second fluid passage is in fluid communication with the regulator cavity when the inlet selection element connects the second inlet to the outlet, whereby, when a differential pressure regulator is located in said regulator cavity, a constant differential pressure can be maintained across said inlet selection element.

A differential pressure regulator or differential pressure governor, as the terms are used herein, refer to a valve type well-known to the skilled person. Such valves comprise a valve element which sets itself in a balance between the pressure upstream of a flow aperture and the pressure downstream of the flow aperture combined with a bias force, e.g. a spring force, to maintain a substantially constant differential pressure over the flow aperture. In the present invention, the inlet selection element defines the flow aperture, and the first and second fluid passages allow the pressure regulator to be connected to the inlets upstream of the inlet selection element, whereby it may maintain a constant differential pressure over the inlet selection element even though the pressure regulator is arranged downstream of the inlet selection element. Examples of differential pressure regulators are described in the applicant's patent applications PCT/DK2002/000710 and PCT/DK2015/050014.

By providing a control valve capable of accommodating and differential pressure regulator, the user of the system may have the option of modifying the valve after installation by inserting a differential pressure regulator, potentially a removable differential pressure regulator insert, into the regulator cavity.

In an embodiment of the invention, the control valve further comprises a differential pressure regulator arranged in said regulator cavity. By providing the control valve of the invention with an integrated or removable differential pressure regulator, it becomes possible to provide a single valve capable of both selecting a fluid source and performing differential pressure regulation, thus making it possible to replace two valves, i.e. a source selection valve such as a three-way valve and a differential pressure control valve. The control valve of the invention is thus able to integrate two valves into one, whereby it may make fluid systems, e.g. HVAC systems, more cost and energy efficient and reduce the initial installation cost.

In some embodiments of the invention, the inlet selection element may be provided by a pair of gate valves, butterfly valves, globe valves, or a combination hereof, wherein one valve of the pair of valves is arranged in each of the first and the second inlets. However, in a presently preferred embodiment, the inlet selection element is a ball with a flow passage, said ball being rotatable between the first position, in which the flow passage connects the first inlet to the outlet, and the second position, in which the flow passage connects the second inlet with to the outlet. Ball valves allow the inlet selection to be controlled by a single rotatable element, whereas the options above require a pair of valves to selectively connect one of the first or the second inlet to the outlet and disconnect the other. Furthermore, ball valves perform well over many duty cycles, thus making embodiments wherein the inlet selection element is provided by a ball very reliable.

In embodiments, wherein the inlet selection element is provided by a ball with a flow passage, the flow passage is L-shaped. By providing an L-shaped flow passage, i.e. a flow passage with a 90-degree bend, the first and the second inlets may by arranged perpendicularly to the outlet, which allows for more efficient pipe layout.

Furthermore, in such an embodiment, the inlet selection element is rotatable between a first position, in which the first inlet is fully connected to the outlet, an intermediary position, in which neither of the inlets are connected to the outlet, and a second position, in which the second inlet is fully connected to the outlet, wherein rotation between the first position and the intermediary position and between the second position and the intermediary position gradually changes the uncovered area of the flow passage, while keeping the first fluid passage or the second fluid passage, respectively, in fluid connection with the regulator cavity.

By providing a control valve wherein the uncovered area of the flow passage gradually changes between the two open positions and the intermediary closed position, the inlet selection element may function as a flow controlling valve by controlling the effective inlet area for fluid from the first fluid source or the second fluid source. Also, by providing an intermediary position in which neither of the first or second inlets are connected to the outlet, the control valve is provided with an off-setting.

Furthermore, by keeping the first fluid passage or the second fluid passage in fluid communication with the regulator cavity in all positions of the inlet selection element between the first position and the intermediary position and between the second position and the intermediary position, respectively, the control valve may perform differential pressure control, independently of the flow setting set by the inlet selection element. The control valve of the invention is thus capable of performing both fluid source selection, flow control, and differential pressure regulation, whereby the control valve of the invention is able to replace a three-way valve and a Pressure Independent Control Valve (PICV).

In some embodiments, wherein the inlet selection element is provided by a ball with an L-shaped flow passage, the first inlet, the second inlet, and the outlet are arranged in the same plane with 90-degrees between the first inlet and the outlet and 90-degrees between the second inlet and the outlet, wherein the inlet selection element is rotational about a rotational axis which is perpendicular on the plane and rotational in a 90-degree interval between the first and the second positions.

By providing the inlet selection element by a ball which is rotatable within a 90-degree interval between the first and the second positions, rotational distance between the first position and the second position will be shorter, thus allowing the control valve to switch between the fluid sources quicker. In such embodiments, the inlet selection element may be in the first position at 0 degrees, in the closed intermediary position at 35 to 55 degrees, and in the second position at 90 degrees, wherein rotation between 0 to 35 degrees gradually reduces the uncovered area of the flow passage, allowing flow control of the first fluid source, and wherein rotation between 90 to 55 degrees gradually reduces the uncovered area of the flow passage, allowing flow control of the second fluid source.

In other embodiments, wherein the inlet selection element is provided by a ball with an L-shaped flow passage, the first inlet, the second inlet, and the outlet are arranged in the same plane with 90-degrees between the first inlet and the outlet and 90-degrees between the second inlet and the outlet, wherein the inlet selection element is rotational about a rotational axis which is perpendicular on the plane and rotational in a 270-degree interval between the first and the second positions.

The advantage of providing the inlet selection element by a ball which is rotatable within a 270-degree interval is that the rotational interval in which the inlet selection element is in the closed intermediary position, may be larger, e.g. 45 to 225 degrees, whereby the rotational intervals between the first position and the intermediary position and between the second position and the intermediary position, in which the uncovered area of the flow passage is gradually reduced, may also be larger. This may allow more precise control of the flow control.

In most embodiments, movement of the inlet selection element between the first and the second positions should go through a closed intermediary position, such that the first inlet and the second inlet are not connected when switching between the first and the second fluid sources.

In an embodiment, the first fluid passage and the second fluid passage are integrated into the inlet selection element, such that, when the inlet selection element connects the first inlet to the outlet, the first fluid passage is moved into a position, in which the first fluid passage connects the first inlet to the regulator cavity, and such that, when the inlet selection element connects the second inlet to the outlet, the second fluid passage is moved into a position, in which the second fluid passage connects the second inlet and the regulator cavity.

By integrating the fluid passages into the inlet selection element it becomes possible to bring the first inlet into fluid connection with the regulator cavity, while disconnecting the fluid connection between the second inlet and the regulator cavity, when the inlet selection element connects the first inlet to the outlet, and vice versa, when the inlet selection element connects the second inlet to the outlet, whereby differential pressure regulation of the flow from the chosen fluid source becomes possible. Additionally, it allows the control valve to be made without additional moving parts, whereby the valve may be made more cost efficient.

In an embodiment of the invention, the control valve further comprises a third fluid passage in fluid communication with the regulator cavity, wherein the first fluid passage is in fluid communication with the third fluid passage when the inlet selection element is in the first position, and wherein the second fluid passage is in fluid communication with the third fluid passage when the inlet selection element is in the second position. By providing a third fluid passage through which the first or the second fluid passages are selectively brought into fluid communication the regulator cavity may be disposed at a distance from the inlet selection element outside immediate contact of movable parts of the control valve.

In an embodiment comprising a third fluid passage, the control valve further comprises a pressure separator, said pressure separator is moveable between a position in which the first fluid passage is in fluid communication with the third fluid passage and another position in which the second fluid passage is in fluid communication with the third fluid passage.

By providing a control valve wherein fluid communication between the first fluid passage and the third fluid passage or between the second fluid passage and the third fluid passage is selectively established by a movable pressure separator, the fluid passages may be incorporated into the static portions of the valve, i.e. the non-moving parts. This may provide a more reliable valve, as the fluid passages remain fixed during operation, and connection of the first or the second fluid passages to the third fluid passage may require less precise alignment as the fluid communication is established by the pressure separator.

The pressure separator may in principle be provided by an element similar to the inlet selection element as described above, e.g. a pair of gate valves adapted to open fluid communication between one of the first or the second fluid passages and the third fluid passage, and shut off fluid communication between the other of the first or the second fluid passages and the third fluid passage. However, as described above for the inlet selection element, the pressure separator is preferably provided by a rotational element, capable of selectively establishing fluid communication between one of the first or the second fluid passages to the regulator cavity via the third fluid passage.

In a presently preferred embodiment, the pressure separator and the inlet selection element are connected to each other such that the pressure separator and the inlet selection element moves in unison. By providing a control valve, wherein the pressure separator and the inlet selection element are connected, selection of the fluid source may be done by a single action, as movement of the inlet selection element into the first position also moves the pressure separator into the position in which the pressure separator connects the first fluid passage to the third fluid passage and movement of the inlet selection element into the second position also moves the pressure separator into the position in which the pressure separator connects the second fluid passage to the third fluid passage.

In an embodiment, the pressure separator is a cylindrical element rotatably arranged in a cylindrical cavity. In such embodiments, the cylindrical cavity is preferably arranged coaxially with the inlet selection element, such that the inlet selection element and the pressure separator may be rotated about the same axis. As mentioned above, such rotational valve elements perform very reliably over many cycles, thus making the control valve of the invention more durable.

In some such embodiments, the pressure separator comprises a first chamber extending around a part of the circumference which upon rotation of the pressure separator brings one of either the first fluid passage or the second fluid passage into fluid communications with the third fluid passage. In further embodiments, the pressure separator comprises a first radially extending chamber which upon rotation of the pressure separator brings one of either the first fluid passage or the second fluid passage into fluid communications with the third fluid passage.

The advantage of this is that the pressure separator may connect one of the first fluid passage or the second fluid passage to the third fluid passage, while disconnecting the other, thereby avoiding that the first and the second fluid passages come into fluid communication with each other or simultaneously come into fluid communication with the third fluid passage.

In an embodiment wherein the first fluid passage, the second fluid passage, and the third fluid passage connect to the cylindrical cavity at different radial positions of the cylindrical cavity, the first fluid passage connects to the cylindrical cavity at a first height of the cylindrical cavity and the second fluid passage connects to the cylindrical cavity at a second height of the cylindrical cavity, said first and second height being different, and wherein the third fluid passage connects to the cylindrical cavity at a height of the cylindrical cavity between the first height and the second height.

By connecting the fluid passages to the cylindrical cavity at different heights of the cylindrical cavity, it becomes even less likely that the first and the second fluid passages are brought into fluid communication with each other, or brought into simultaneous fluid communication with the third fluid passage.

In an embodiment of the invention, the control valve further comprises a return flow inlet adapted to be connected to the device to receive a fluid returning from the device, a first return flow outlet adapted to be connected to the first fluid source, a second return flow outlet adapted to be connected to the second fluid source, and a return outlet selection element arranged downstream of the return flow inlet and upstream of the first return flow outlet and the second return flow outlet, said return outlet selection element being adapted to bring one of the first return flow outlet and the second return flow outlet into fluid connection with the return flow inlet, wherein the return outlet selection element is connected to the inlet selection element, such that, when the first inlet is in fluid connection with the outlet, the first return flow outlet is in fluid connection with the return flow inlet, and, when the second inlet is in fluid connection with the outlet, the second return flow outlet is in fluid connection with the return flow inlet.

By providing a return flow inlet selectively connectable to a first return flow outlet or a second return flow outlet via a return outlet selection element, the control valve becomes a six-way valve with the possibility of an integrated differential pressure regulator. Such a valve may be advantageous for HVAC systems, wherein the heating fluid and the coolant are supplied to each individual heating or cooling convector from a central source, such as district heating and cooling, as the valve integrates two three-way valves and a pressure control valve into one valve, thus making the system more cost efficient.

In an embodiment of the invention, the return outlet selection element is connected to the inlet selection element such that return outlet selection element and the inlet selection element moves in unison. As mentioned above, this provides a stable inlet and return flow outlet selection during operation, as the pressure separator and the inlet selection element are both turned by one rotation force.

In an embodiment of the invention, at least one of the first and second inlets, and if present the first and return flow outlets, is provided with an attachment portion adapted to attach a cover lid onto the respective inlet. Such attachment portions may be provided by a threaded portion or a snap lock, whereby a cover lid may be attached to cover the respective inlet. By enabling the user to cover one of the inlets, and if present one of the first and return flow outlets, the control valve may serve as a one way PICV, thereby making the valve more versatile. In such embodiments, the control valve may further comprise a locking member adapted for locking the inlet selection element in fluid communication with the uncovered of the first and second inlets.

In a second aspect of the inventions, the objects of the invention and more are solved by a pressure separator for selectively connecting a fluid passage to a pressure regulator, wherein the pressure separator comprises, a substantially cylindrical body with a longitudinal axis, a first ring extending around the circumference of the cylindrical body, said first ring having a center axis which is substantially parallel with the longitudinal axis, a second ring extending around the circumference of the cylindrical body, said second ring having a center axis which is substantially parallel with the longitudinal axis, and a third ring extending around the circumference of the cylindrical body, said third ring contacting the first ring and the second ring, whereby the first, second, and third rings define two pressure chambers separated by the third ring.

By providing a pressure separator with two chambers each extending around a part of the circumference of the cylindrical body, selectively connecting one of a first or a second fluid passage to a third fluid passage and disconnecting the other without risking the first and the second coming into fluid connection becomes easier. As the fluid separator may be adapted to be placed in an intermediary rotational position in which neither of the chambers connects to the third fluid passage.

In an embodiment of the invention, the pressure separator further comprises a connection portion at an end of the cylindrical body, said connection portion being adapted for connection with the inlet selection element or a return flow outlet selection element. By providing a connection portion, the pressure separator may be connected to an inlet selection element or a return flow outlet selection element, whereby the two may move in unison. This may facilitate selection between fluid sources in a control valve as the pressure separator and the inlet selection element and/or the return flow outlet selection element may be rotated in one action.

In an embodiment of the invention, the pressure separator further comprises an axle extending outwards substantially parallel to the longitudinal axis from an end of the cylindrical body. By providing an axle on the pressure separator, the pressure separator may be connected to a handle and/or an actuator, whereby external control of the position of the pressure separator is facilitated. In embodiments wherein the pressure separator comprises a connection portion, the connection portion and the axle are arranged at opposite ends of the cylindrical body, whereby the axle may be used to rotate both the pressure separator and the inlet selection element.

In an embodiment of the invention, at least one of the first, second, and third rings comprise a recess extending around circumference of the respective ring, said recess being adapted to retain a seal. By providing the rings with a circumferential recess, an O-ring may be retained in the recess to seal the pressure chambers from the surroundings and from each other.

In an embodiment of the invention, at least one of the first, second, and third rings is provided with a seal. By providing one or more of the rings with a seal, the pressure chambers may be sealed from the surroundings and from each other. This may ensure that the pressure in the regulator cavity of the valve where the pressure separator is adapted to be installed is substantially identical to the fluid pressure at the selected inlet.

In a third aspect of the invention, the objects of the invention and more are solved by the control valve of the first aspect of the invention comprising a pressure separator of the second aspect of the invention.

In such embodiments, the pressure separator may be provided integrally with the inlet selection element and/or the return outlet selection element, if present. This may reduce the number of components in the control valve, whereby manufacturing costs may be reduced.

### Brief description of the drawings

The invention will be described in more detail below by means of nonlimiting examples of embodiments and with reference to the schematic drawings, in which:
Fig. 1 shows a schematic cutaway drawing of an embodiment of the valve of the invention, wherein the first inlet is connected to the outlet;
Fig. 2 shows a schematic cutaway drawing of an embodiment of the valve of the invention, wherein the second inlet is connected to the outlet;
Fig. 3 shows a schematic side view of an embodiment of the valve of the invention;
Fig. 4 shows a schematic side view of an embodiment of the valve of the invention;
Fig. 5 shows a schematic drawing of an embodiment of a pressure separator of the invention;
Fig. 6 shows a schematic cutaway drawing of an embodiment of the valve of the invention, wherein the first inlet is connected to the outlet;
Fig. 7 shows a schematic cutaway drawing of an embodiment of the valve of the invention, wherein the second inlet is connected to the outlet;
Fig. 8 shows a schematic side view of an embodiment of the valve of the invention;
Fig. 9 shows a schematic side view of an embodiment of the valve of the invention;
Fig. 10a shows a schematic cutaway drawing of an embodiment of the valve of the invention, wherein the first inlet is connected to the outlet;
Fig. 10b shows a schematic cutaway drawing of an embodiment of the valve of the invention, wherein the first inlet is connected to the outlet;
Fig. 10c shows the pressure separator from an angle corresponding to its angular position in Fig. 10a and b;
Fig. 11a shows a schematic cutaway drawing of an embodiment of the valve of the invention, wherein the neither of the inlets are connected to the outlet;
Fig. 11b shows a schematic cutaway drawing of an embodiment of the valve of the invention, wherein the neither of the inlets are connected to the outlet;
Fig. 11c shows the pressure separator from an angle corresponding to its angular position in Fig. 11a and b;
Fig. 12a shows a schematic cutaway drawing of an embodiment of the valve of the invention, wherein the first second is connected to the outlet;
Fig. 12b shows a schematic cutaway drawing of an embodiment of the valve of the invention, wherein the second inlet is connected to the outlet; and
Fig. 12c shows the pressure separator from an angle corresponding to its angular position in Fig. 12a and b.

### Detailed description of the invention

In the following, embodiments of the invention will be described in further detail. Each specific variation of the features can be applied to other embodiments of the invention unless specifically stated otherwise.

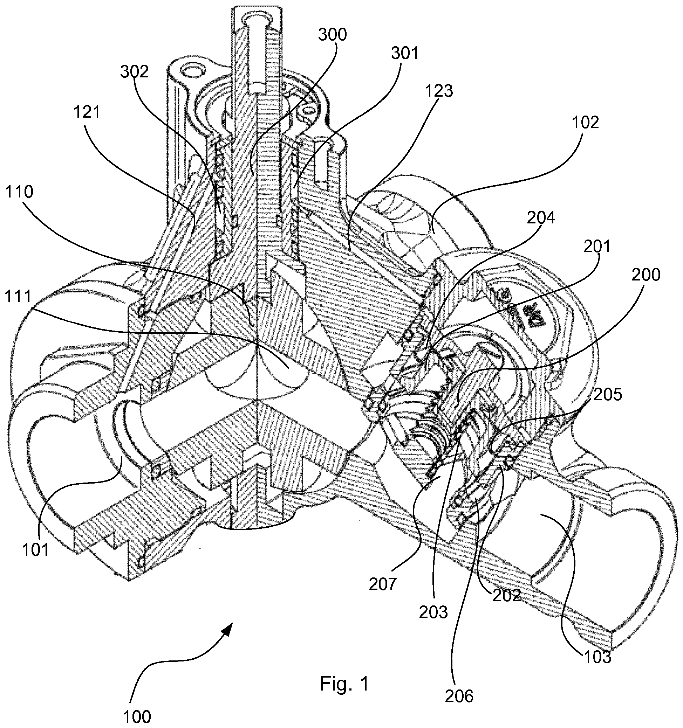

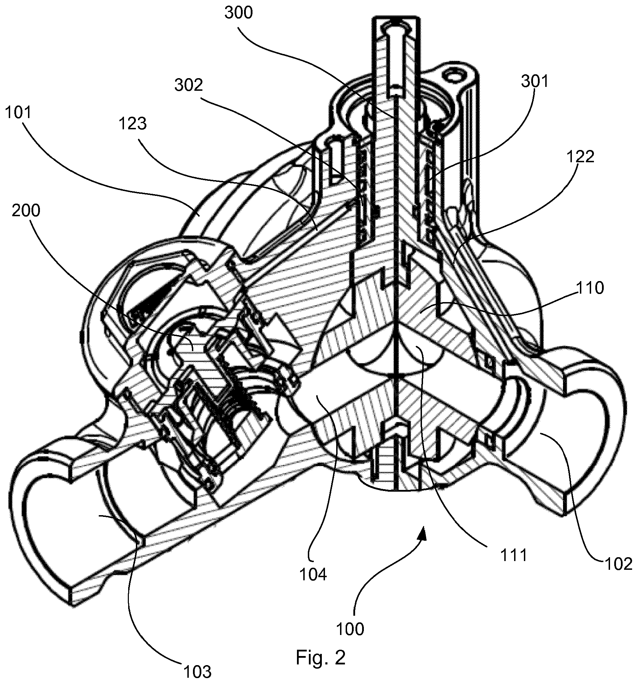

Turning first to Fig. 1 and 2, which show a schematic cutaway drawing of a control valve 100 of the invention. The shown embodiment is a three-way valve comprising a first inlet 101, a second inlet 102, and an outlet 103. The control valve 100 of the invention can be suited for use in various types of systems with several fluid sources where differential pressure regulation is required. However, the control valve 100 is particularly suited for use in Heating, Ventilation, and Air Condition (HVAC) systems, where the outlet 103 may be connected to a device, e.g. a heating and cooling convector, and the first inlet 101 can be connected to a first fluid source supplying a first fluid, e.g. a heating fluid, to the device and the second inlet 103 can be connected to a second fluid source supplying a second fluid, e.g. a coolant, to the device.

The first inlet 101, the second inlet 102, and the outlet 103 are arranged in the same plane with and angle of 180 degrees between the first and the second inlets 101, 102, and an angle of 90 degrees between the outlet 103 and each of the first and the second inlets 101, 102. This angular placement allows the piping connecting the control valve 100 to the fluid sources to be arranged in the most efficient path.

To enable a user to select which of the first or the second inlets 101, 102 are set in fluid communication with the outlet 103, the control valve 100 comprises an inlet selection element 110 arranged downstream of the first and the second inlets 101, 102 and upstream of the outlet 103. In the shown embodiment, the inlet selection element 110 is provided by a ball with an L-shaped flow passage 111, whereby rotation of the inlet selection element 110 between a first and a second position, brings one of the first inlet 101 or the second inlets 102 into fluid communication with the outlet 103 and disconnects the other.

The size and shape of the openings of the flow passage 111 are such that rotation of the inlet selection element 110 between the two positions gradually reduces the overlapping area between the flow passage 111 and the selected inlet 101, 102 and/or the outlet, whereby rotation of the inlet selection element 110 allows the user to define the uncovered area of the flow passage 111 to provide flow control. The size and shape of the openings of the flow passage 111 are also such that when the inlet selection element 110 is in an intermediary position between the first and the second positions, neither of the first inlet 101 or the second inlet 102 connects to the flow passage 111, whereby an off position is provided.

The control valve 100 further comprises a regulator cavity 130 adapted to accommodate a differential pressure regulator 200. The regulator cavity 130 is arranged downstream of the inlet selection element 110 and upstream of the outlet 103 and is adapted to accommodate a differential pressure regulator 200 adapted to maintain a substantially constant differential pressure over the inlet selection element 110. In the shown embodiment, the regulator cavity 130 is accessible from the outside of the control valve 100 by means of a cavity cover 131 through which the differential pressure regulator 200 can be inserted into or removed from the control valve 100. In other embodiments, the differential pressure regulator 200 may be built into the control valve 100.

To connect the regulator cavity 130 to the first and second inlets 101, 102, the control valve 100 further comprises a first fluid passage 121 and a second fluid passage 122 connecting the first inlet 101 and the second inlet 102, respectively, to a cylindrical cavity, and a third fluid passage 123 connecting the cylindrical cavity to the regulator cavity 130. By providing a fluid communication between the first inlet 101 and the regulator cavity 130 and between the second inlet 102 and the regulator cavity 130 a differential pressure regulator 200 arranged in the regulator cavity 130 will be able to regulate the differential pressure over the inlet selection element 110 despite being arranged downstream of the inlet selection element 110. The selective connection of one of the first or the second fluid passages 121, 122 to the third fluid passage 123 and the disconnection of the other 121, 122 is performed by a pressure separator 300, which will be described in detail below, arranged in the cylindrical cavity.

To select which one of the first or the second fluid passages 121, 122 is connected to the third fluid passage 123, and there through to the regulator cavity 130, the control valve 100 comprises a pressure separator 300 located in the chamber. The pressure separator 300 is rotatable between a position in which the first fluid passage 121 is in fluid communication with the third fluid passage 123 and another position in which the second fluid passage 122 is in fluid communication with the third fluid passage 123.

In the shown embodiment, a differential pressure regulator 200 is accommodated in the regulator cavity 130. Differential pressure regulators 200 in general are well-known in the literature and come in various types. The regulator cavity 130 can be adapted to accommodate a specific type. In the shown embodiment, the differential pressure regulator 200 comprises a first hollow regulator element 201 and a second hollow regulator element 202, wherein the first regulator element 201 is mounted coaxially inside the second regulator element 202 and is displaceable along a longitudinal axis of the differential pressure regulator 200, while the second regulator element 202 is fixedly accommodated in the regulator cavity 130.

The pressure regulator 200 comprises a biasing member 203 which in the shown embodiment is provided by a helical spring. The biasing member 203 is connected to the first regulator element 201 and is adapted to urge the first regulator element 201 towards a default position. In the shown embodiment, the biasing member 203 extends between the first regulator element 201 and an abutment portion fixedly connected to the second regulator element 202 by a number of ribs which allow fluid to enter the hollow room of the first regulator element 201.

Each of the first regulator element 201 and the second regulator element 202 are provided with an aperture, wherein said apertures have a maximum mutual overlap when the first regulator element 201, and displacement of the first regulator element 201 changes the overlapping area of the apertures, whereby the position of the first regulator element 201 defines a flow aperture 206 with an area depending on the displacement of the first regulator element 201.

The first regulator element 201 is further connected to the second regulator element 202 via a rolling diaphragm 205 which extends around the circumference of the first regulator element 201, whereby the diaphragm 205 and the first regulator element 201 defines a regulator chamber 204. The third fluid passage 123 connects to the regulator cavity such that it is in fluid communication with the regulator chamber 204 when a differential pressure regulator 200 is accommodated in the regulator cavity 130.

With the exception of the third fluid passage 123 the regulator chamber 204 is isolated. This means that the pressure in the regulator chamber 204 during operation is substantially the same as the selected inlet 101, 102 which through the first or the second fluid passages 121, 122 and the third fluid passage 123 is brought into fluid communication with the regulator chamber 204. Effectively, the pressure in the regulator chamber 204 becomes substantially the same as the pressure of the inlet 101, 102 which is connected to the outlet 103 upstream of the inlet selection element 110.

The hollow room inside the first regulator elements 201 is in fluid communication with the inlet selection element 110, whereby the hollow room defines a flow chamber 207 in which the fluid pressure during operation is substantially the same as the fluid pressure of the flow immediately downstream of the inlet selection element 110. Through this configuration, the first regulator element 201 senses both the pressure of the flow chamber 207 and the regulator chamber 204.

During operation, this means that the first regulator element 201 will set itself in a balance between the force exerted by the pressure in the regulator chamber 204, i.e. the pressure upstream of the inlet selection element 110, and the forces exerted by the pressure of the flow chamber 207, i.e. the pressure downstream of the inlet selection element 110, and the biasing member 203. It should be noted that the force exerted on the first regulating element 201 by the biasing member 203 is substantially 0 N at the default position of the first regulator element 201, and that the force exerted on the first regulating element 201 by the biasing member 203 depends on the displacement of the first regulator element 201. Furthermore, in the shown embodiment wherein the biasing member 203 is provided by a helical spring, the force exerted on the first regulating element 201 by the biasing member 203 will be substantially linear as governed by Hooke's law. Other embodiments may however be provided with a biasing member 203 with non-linear characteristics.

During operation, the differential pressure over the inlet selection element 110 thus displaces the first regulator element 201 which causes a change in the area of the flow aperture 206. This in turn regulates the pressure in the flow chamber 207 by increasing/decreasing the available area for the fluid to flow to the outlet 103. Through this continuous regulation, the differential pressure regulator 200 is able to maintain a substantially constant differential pressure over the inlet selection element 110, even when the system experiences pressure fluctuations upstream of the selected inlet 101, 102. It should be noted, that in some embodiments, the second regulator element 202 may be provided by the regulator cavity 130 itself.

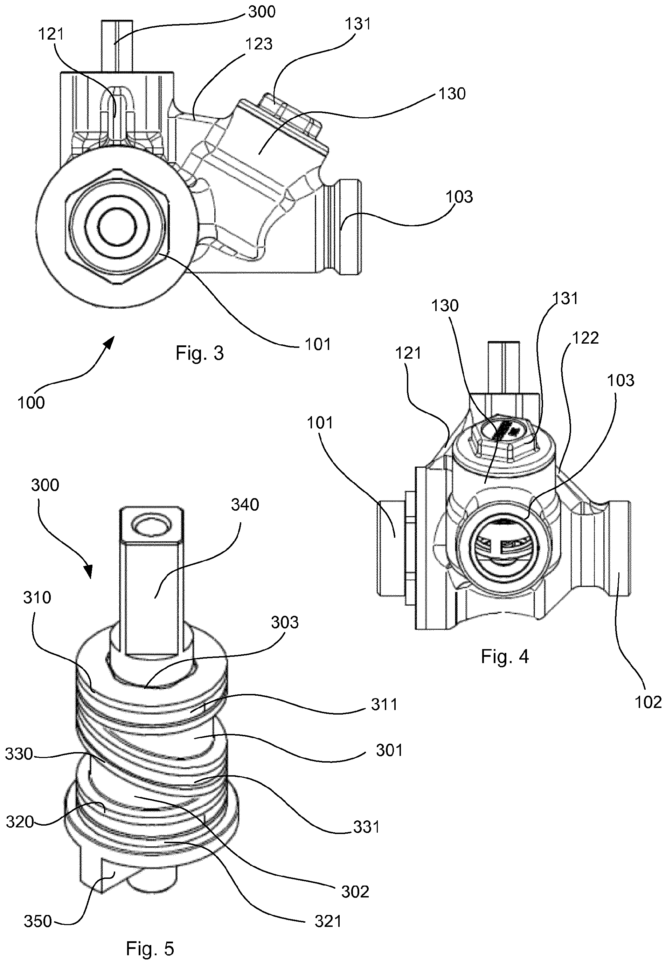

Turning now to Fig. 3 and 4, a control valve 100 of the invention is shown from a side view and a front view, respectively. As can be seen, the first, second, and third fluid passages 121, 122, 123 connect to the cylindrical cavity holding the pressure separator 300 at different radial positions of the cylindrical cavity, i.e. when viewed from above, the fluid passages 121, 122, 123 connect to the cylindrical cavity from different angles. In the shown embodiment, the first and the second fluid passages 121, 122 connects to the cylindrical cavity with an angle of 180 degrees between them, and the third fluid passage 123 connects to the cylindrical cavity with an angle of 90 degrees between the third fluid passage 123 and each of the first and the second fluid passages 121, 122.

Furthermore, the first, second, and third fluid passages 121, 122, 123 connect to the cylindrical cavity holding the pressure separator 300 at different axial positions of the cylindrical cavity, i.e. when viewed from the side, the fluid passages 121, 122, 123 to the cylindrical cavity at different positions along the longitudinal axis of the cylindrical chamber. As will be described below, this placement of the first, second, and third fluid passages 121, 122, 123 allow the pressure separator 300 to selectively connect one of the first or the second fluid passages 121, 122 to the third fluid passage 123 and disconnect the other, while avoiding the first and the second fluid passages 121, 122 are brought into fluid communication.

Fig. 5 shows an embodiment of the pressure separator 300 of the invention. The pressure separator 300 may in some embodiments be provided by a ball with a flow passage similar to the inlet selection element 110. In the shown embodiment however, the pressure separator 300 comprises a substantially cylindrical body 303 with a longitudinal axis.

The pressure separator 300 further comprises a first substantially co-axial ring 310 extending around the circumference of the cylindrical body 303, i.e. the center axis of the first ring 310 is substantially parallel with the longitudinal axis of the cylindrical body 303. The pressure separator 300 further comprises a second substantially co-axial ring 320 extending around the circumference of the cylindrical body 303, and a third ring 330 extending around the circumference of the cylindrical body 303. And contacting the first ring 310 and the second ring 320. Thus, the first, second, and third rings 310, 320, 330 define two pressure chambers 301, 302 separated by the third ring 330.

The placement of two pressure chambers 301, 302 are such, that the first pressure chamber 301 lies above the third ring 330 while the second pressure chamber 302 lies below the third ring 330. This placement of the pressure chambers 301, 302 allow the first pressure chamber 301, when the pressure separator 300 is brought into the correct rotational position in the cylindrical cavity, to connect the higher fluid passage 121, i.e. the first fluid passage 121 in the previously shown embodiments, to the third fluid passage 123. Similarly, the second pressure chamber 302 is able to connect the lower fluid passage 122, i.e. the second fluid passage 121 in the previously shown embodiments, to the third fluid passage 123, when the pressure separator 300 is brought into the correct rotational position in the cylindrical cavity.

The pressure separator 300 is thus able to selectively bring one of the first and the second fluid passages 121, 122 into fluid communication with the third fluid passages 123 and disconnect the other. Furthermore, by providing a pressure separator 300 wherein fluid communication between the first fluid passage 121 and the third fluid passage 123 and between the second fluid passage 122 and the third fluid passage 123 are established by separate pressure chambers 301, 302, the pressure separator 300 is unable to bring the first fluid passage 121 into fluid communication with the second fluid passage 122, thereby ensuring that the two fluid sources are not connected vie the fluid passages 121, 122.

In the shown embodiment of the pressure separator 300, each of the first, second, and third rings 310, 320, 330 comprise a recess extending around circumference of the respective ring 310, 320, 330. The recess enables each ring 310, 320, 330 to retain an O-ring (not shown), whereby the two pressure chambers 301, 302 are better sealed from the exterior, by means of the O-rings retained by the first and the second rings 310, 320, and from each other, by means of the O-ring retained by the third ring 330.

In general, the control valve 100, the differential pressure regulator 200, and the pressure separator 300 may substantially be made from a polymer, metal, or alloy which will not corrode, melt, turn brittle, or react chemically with either of the fluids from the two fluid sources. When intended for use in HVAC systems, wherein one fluid may be heated water and the other cooled water, the control valve 100 and the pressure separator 300 may mostly be made from brass or materials with similar properties. If the control valve 100 is intended for use with more reactive or corrosive fluids, e.g. salt water, the control valve 100 and the pressure separator 300 may mostly be made from corrosive resistant metals or alloys or from polymer. In embodiments wherein the pressure separator 300 is made from polymer, the rings 310, 320, 330 may be provided with integral seals moulded or otherwise fused with the rings 310, 320, 330.

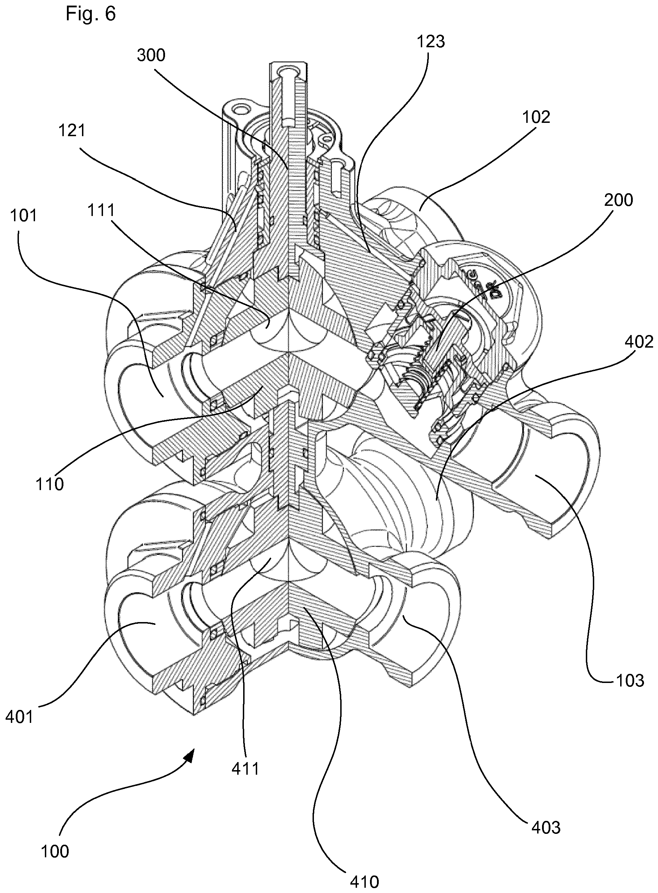

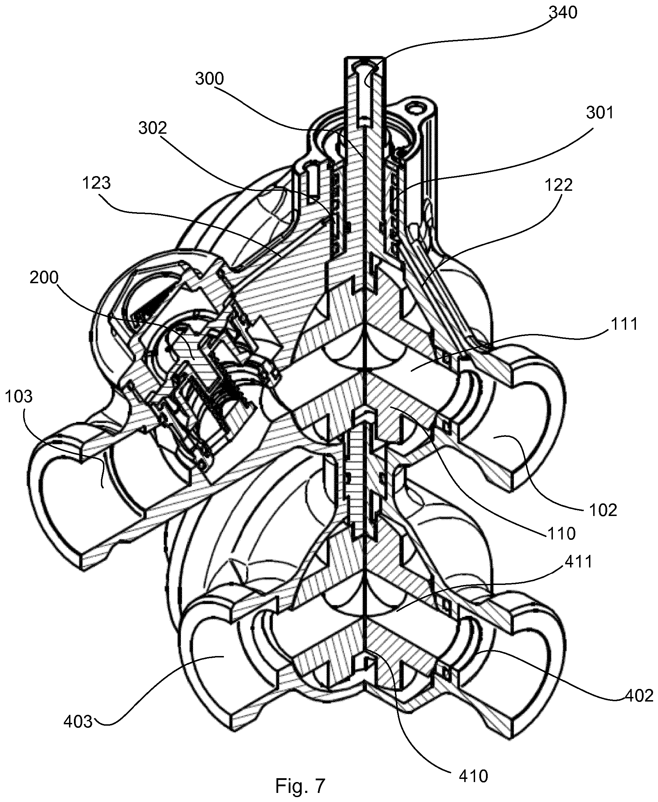

Fig. 6 and 7 show another embodiment of the control valve 100. The upper portion of the shown control valve 100 is substantially identical to that of the embodiments shown above. The shown embodiment differs from those above in that it further comprises a lower portion adapted to selectively connect a return flow from the device to a first and a second fluid drain. In HVAC or other systems, the first and a second fluid drain may be the first and the second fluid sources, whereby the fluid may be returned for reheating/cooling to be reused.

To this end, the shown embodiment comprises a return flow inlet 403 adapted to be connected to the device to receive a fluid returning from the device. The control valve 100 further comprises a first return flow outlet 401 adapted to be connected to the first fluid drain, e.g. the first fluid source for reuse, and a second return flow outlet 402 adapted to be connected to the second fluid drain, e.g. the second fluid source for reuse.

The first return flow outlet 401, the second return flow outlet 402, and the return flow inlet 403 are arranged in the same plane with and angle of 180 degrees between the first and the second return flow outlets 401, 402, and an angle of 90 degrees between the return flow inlet 403 and each of the first and the second return flow outlets 401, 402. Effectively, the first return flow outlet 401, the second return flow outlet 402, and the return flow inlet are arranged parallel with the first inlet 101, the second inlet 102, and the outlet, respectively. This angular placement allows the piping connecting the control valve 100 to the fluid sources and drains to be arranged in the most efficient path.

To enable a user to select which of the first or the second return flow outlets 401, 402 are set in fluid communication with the return flow inlet 403, the control valve 100 comprises a return outlet selection element 410 arranged upstream of the first and the second return flow outlets 401, 402 and downstream of the return flow inlet 403. In the shown embodiment, the return outlet selection element 410 is provided by a ball with an L-shaped flow passage 411, whereby rotation of the return outlet selection element 410 between a first and a second position, brings one of the first return flow outlet 401 or the second return flow outlet 402 into fluid communication with the return flow inlet 403 and disconnects the other.

The upper and lower portions of the shown control valve 100, i.e. the portions controlling fluid to and from the device, respectively, are arranged in axial extension of each other, such that the inlet selection element 110 and the return outlet selection element 410 share the same rotational axis. This allows the inlet selection element 110 and the return outlet selection element 410 to be connected, whereby the inlet selection element 110 and the return outlet selection element 410 will move in unison.

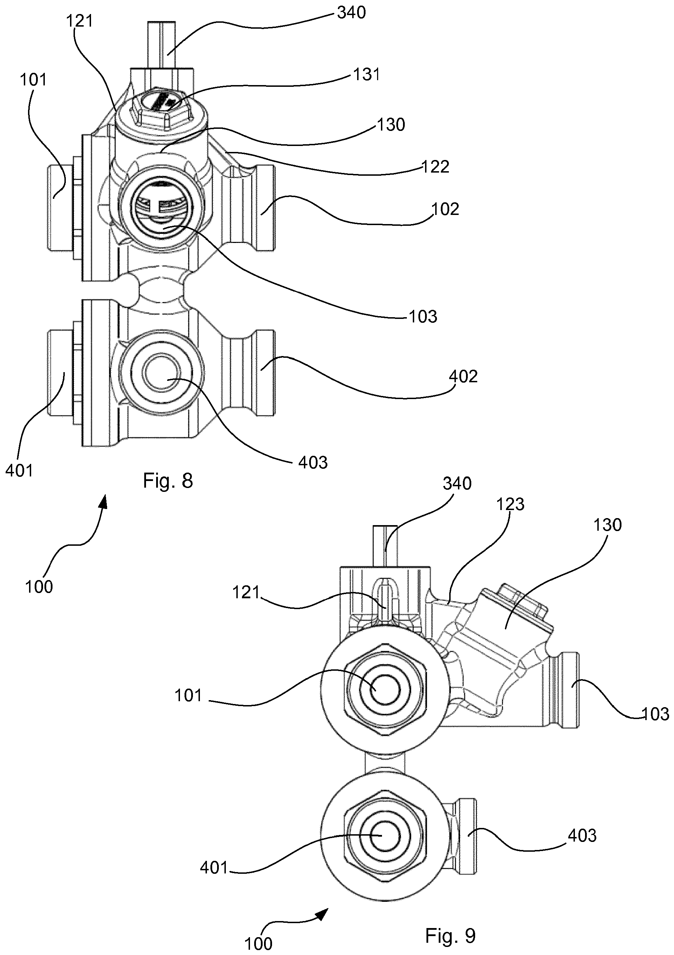

Fig. 8 and 9 show the control valve of Fig. 6 and 7 from a front view and a side view, respectively. Generally, for all shown embodiments, the axle 340 of the pressure separator 300 may be connected to an electronic actuator (not shown), whereby selection of the fluid source and flow rate may be controlled remotely and with higher precision.

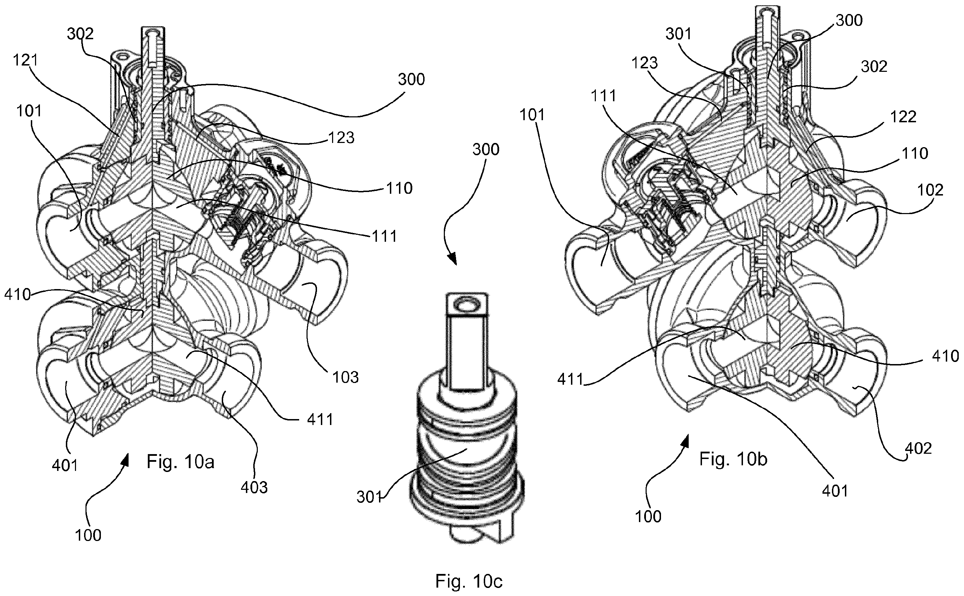

The angular position of the inlet selection element 110, the return flow outlet selection element 410, and the pressure separator 300 in the various positions is shown Figs. 10 to 12. While the Figs. show the control valve 100 shown in Figs. 6 to 9, the description applies equally to the inlet selection element 110 and the pressure separator 300 of the embodiment shown in Figs. 1 to 4. In the shown embodiment of the inlet selection element 110, the return flow outlet selection element 410, and the pressure separator 300 are arranged in axial extension of each other and are connected such that the three share the same rotational axis and move in unison.

In Figs. 10a and b the control valve 100 is shown with the inlet selection element 110 and the return flow outlet selection element 410 in their respective first positions, in which the first inlet 101 is connected to the outlet 103 and the first return flow outlet 401 connected to the return flow inlet 403, respectively. Similarly, Fig. 10c show the pressure separator 300 from an angle corresponding to Fig. 10a.

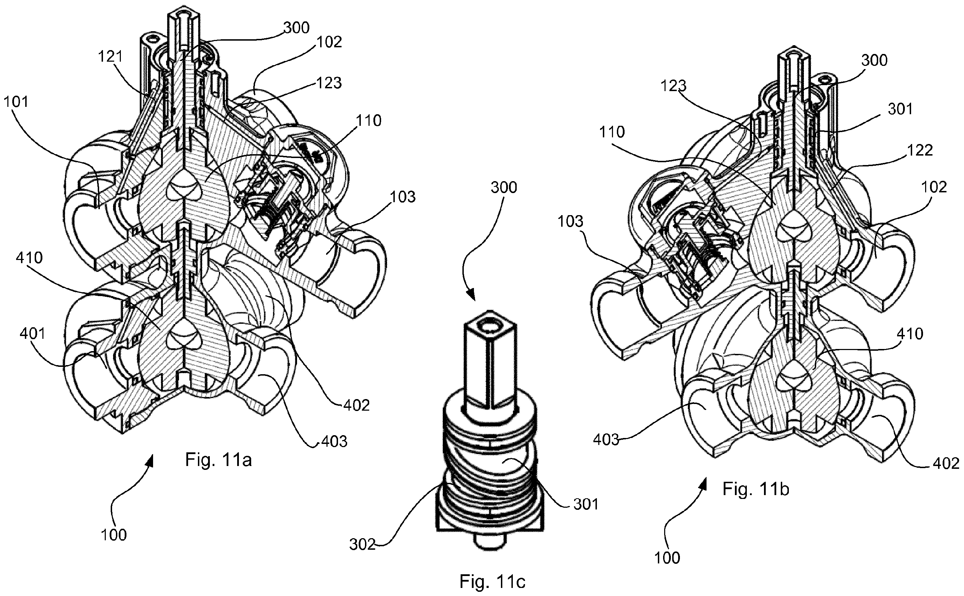

In Figs. 11a and b the control valve 100 is shown in the intermediary closed position in which the inlet selection element 110 connect neither of the first or the second inlets 101, 102 to the outlet 103. Furthermore, the return flow outlet selection element 410 connect neither of the first or the second return flow outlets 401, 402 to the return flow inlet 403. The shown control valve 100 is therefore in a closed state, wherein no fluid is supplied or extracted from the device.

Fig. 11c show the pressure separator 300 from an angle corresponding to Fig. 11a. As no fluid flow through the inlet selection element 110, differential control is in principle redundant. However, it is important that the pressure separator 300 does not connect the first and the second fluid passages 121, 122 and there through the first and the second fluid sources.

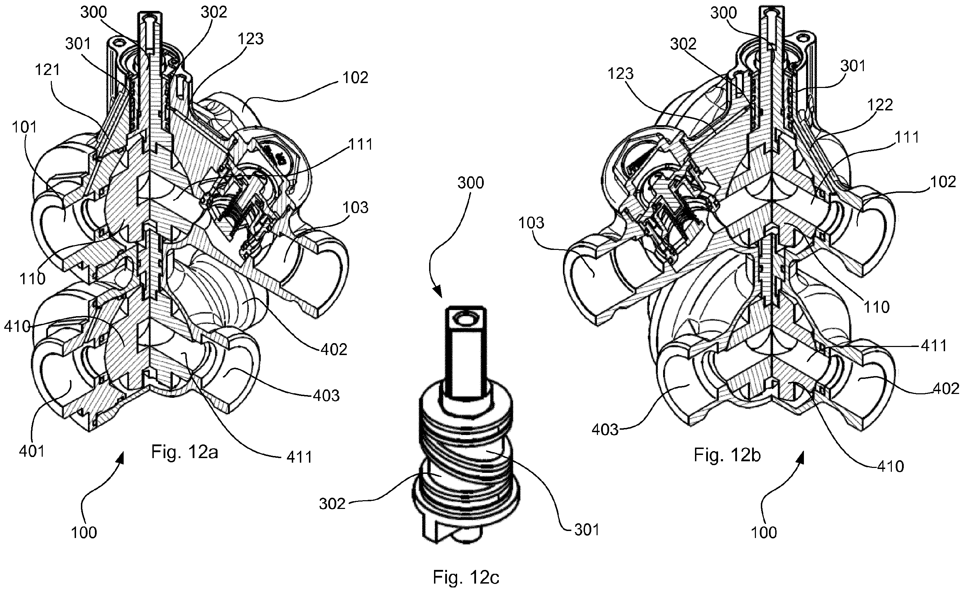

In Figs. 12a and b the control valve 100 is shown with the inlet selection element 110 and the return flow outlet selection element 410 in their respective second positions, in which the second inlet 102 is connected to the outlet 103 and the second return flow outlet 402 connected to the return flow inlet 403, respectively. Similarly, Fig. 12c show the pressure separator 300 from an angle corresponding to Fig. 12a.

As described above, the openings of the flow passage 111 of the inlet selection element 110 has a maximal overlap with the first inlet 101 in the first position and a maximal overlap with the second inlet 102 in the second position, wherein rotation of the inlet selection element 110 between the first and the second positions gradually reduces the uncovered area of the flow passage 111, the uncovered area of the flow passage 111 being zero in an intermediary interval which spans over an angular interval.

In the shown embodiment, the inlet selection element 110 and the return flow outlet selection element 410 are adapted to be rotatable in a 90-degree interval, i.e. movement between the first and the second positions of the respective selection elements 110, 410 is done by doing a ¼ rotation.

If the first position of the inlet selection element 110 is defined as the angular position of 0-degrees, the flow passage 111 will gradually go from the maximal overlap to no overlap in the angular interval from 0 to 35 degrees. Throughout this angular interval, the first pressure chamber 301 of the pressure separator 300 is in fluid communication with both the first and the third fluid passages 121, 123 to establish fluid communication between the first inlet 101 and the regulator chamber 204.

Similarly, when the second position of the inlet selection element 110 is defined at the angular position of 90-degrees, the flow passage 111 will gradually go from the maximal overlap to no overlap in the angular interval from 90 to 55 degrees. Throughout this angular interval, the second pressure chamber 302 of the pressure separator 300 is in fluid communication with both the second and the third fluid passages 122, 123 to establish fluid communication between the second inlet 102 and the regulator chamber 204.

In the intermediary angular interval, i.e. from 35 to 55 degrees, the inlet selection element 110 is positioned such that neither the first or the second inlets 101, 102 are connected to the outlet 103. The control valve 100 is thus capable of providing fluid source selection and flow control through angular positioning of the inlet selection element 110.

In another embodiment, the inlet selection element 110 and the return flow outlet selection element 410 could be adapted to be rotatable in a 270-degree interval, i.e. movement between the first and the second positions of the respective selection elements 110, 410 is done by doing a ¾ rotation.

## Claims

1. A control valve (100) for selectively regulating a fluid flow to a device, such as a heating or cooling convector, said control valve (100) comprising:
a first inlet (101) adapted to be connected to a first fluid source;
a second inlet (102) adapted to be connected to a second fluid source;
an outlet (103) adapted to be connected to the device;
an inlet selection element (110) arranged downstream of the first and the second inlets (101, 102) and upstream of the outlet (103), wherein said inlet selection element (110) is moveable between a first position in which the first inlet (101) is in fluid communication with the outlet (103) and a second position in which the second inlet (102) is in fluid communication with the outlet (103); **characterised by** further comprising:
a regulator cavity (130) adapted to accommodate a differential pressure regulator (200), said regulator cavity (130) being arranged downstream of the inlet selection element (110) and upstream of the outlet (103);
a first fluid passage (121) in fluid communication with the first inlet (101); and
a second fluid passage (122) in fluid communication with the second inlet (102),
wherein the first fluid passage (121) is in fluid communication with the regulator cavity (130) when the inlet selection element (110) connects the first inlet (101) to the outlet (103) and the second fluid passage (122) is in fluid communication with the regulator cavity (130) when the inlet selection element (110) connects the second inlet (102) to the outlet (103),
whereby, when a differential pressure regulator (200) is located in said regulator cavity (130), a constant differential pressure can be maintained across said inlet selection element (110).

2. The control valve according to claim 1, further comprising a differential pressure regulator (200) arranged in said regulator cavity (130).

3. The control valve (100) of any one of the preceding claims, further comprising a third fluid passage (123) in fluid communication with the regulator cavity (130).

4. The control valve (100) of claim 3, further comprising a pressure separator (300), wherein said pressure separator (300) is moveable between a position, which establishes fluid communication between the first fluid passage (121) and the third fluid passage (123), and another position, which establishes fluid communication between the second fluid passage (122) and the third fluid passage (123).

5. The control valve (100) of claim 4, wherein the pressure separator (300) and the inlet selection element (110) are connected to each other such that the pressure separator (300) and the inlet selection element (110) move in unison.

6. The control valve (100) of claim 4 or 5, wherein the pressure separator (300) is a substantially cylindrical element (303) rotatably arranged in a substantially cylindrical cavity (301, 302) of the control valve (100).

7. The control valve (100) of claim 6, wherein the first fluid passage (121), the second fluid passage (122), and the third fluid passage (123) connect to the cylindrical cavity (301, 302) at different radial positions of the cylindrical cavity (301, 302).

8. The control valve (100) of claim 7, wherein the pressure separator (300) comprises a first chamber (301) extending around a part of the circumference which upon rotation of the pressure separator (300) brings one of either the first fluid passage (121) or the second fluid passage (122) into fluid communications with the third fluid passage (123).

9. The control valve (100) of claim 7 or 8, wherein the pressure separator (300) comprises:
a substantially cylindrical body (303) with a longitudinal axis;
a first ring (310) extending around the circumference of the cylindrical body (303), said first ring (310) having a center axis which is substantially parallel with the longitudinal axis;
a second ring (320) extending around the circumference of the cylindrical body (303), said second ring (320) having a center axis which is substantially parallel with the longitudinal axis; and
a third ring (330) extending around the circumference of the cylindrical body (303), said third ring (330) contacting the first ring (310) and the second ring (320),
whereby the first, second, and third rings (310, 320, 330) define two pressure chambers (301, 302) separated by the third ring (330).

10. The control valve (100) of claim 9, wherein the first fluid passage (121) connects to the cylindrical cavity (301, 302) at a first height of the cylindrical cavity (301, 302), and the second fluid passage (122) connects to the cylindrical cavity (301, 302) at a second height of the cylindrical cavity (301, 302), said first and second heights being different from each other, and wherein the third fluid passage (123) connects to the cylindrical cavity at a height of the cylindrical cavity (301, 302) between the first height and the second height.

11. The control valve (100) of any one of the preceding claims, further comprising:
a return flow inlet (403) adapted to be connected to the device to receive a fluid returning from the device;
a first return flow outlet (401) adapted to be connected to the first fluid drain;
a second return flow outlet (402) adapted to be connected to the second fluid drain; and
a return outlet selection element (410) arranged upstream of the first and the second return flow outlets (401, 402) and downstream of the return flow inlet (403), wherein said return outlet selection element (410) is moveable between a first position, in which the first return flow outlet (401) is in fluid communication with the return flow inlet (403), and a second position, in which the second return flow outlet (402) is in fluid communication with the return flow inlet (403).

12. The control valve (100) of claim 11, wherein the return outlet selection element (410) is connected to the inlet selection element (110) such that the return outlet selection element (410) and the inlet selection element (110) move in unison.

## Patentansprüche

1. Steuerventil (100) zum selektiven Regeln eines Fluidflusses zu einer Vorrichtung, wie z. B. einem Heiz- oder Kühlkonvektor, wobei das Steuerventil (100) umfasst:
einen ersten Einlass (101), der dazu eingerichtet ist, mit einer ersten Fluidquelle verbunden zu werden;
einen zweiten Einlass (102), der dazu eingerichtet ist, mit einer zweiten Fluidquelle verbunden zu werden;
einen Auslass (103), der dazu eingerichtet ist, mit der Vorrichtung gekoppelt zu werden;
ein Einlassauswahlelement (110), das stromabwärts des ersten und des zweiten Einlasses (101, 102) und stromaufwärts des Auslasses (103) angeordnet ist, wobei das Einlassauswahlelement (110) zwischen einer ersten Position, in der der erste Einlass (101) in Fluidverbindung mit dem Auslass (103) steht, und einer zweiten Position, in der der zweite Einlass (102) in Fluidverbindung mit dem Auslass (103) steht, bewegbar ist; **dadurch gekennzeichnet, dass** es ferner umfasst:
einen Reglerhohlraum (130), der dazu ausgelegt ist, einen Differenzdruckregler (200) aufzunehmen, wobei der Reglerhohlraum (130) stromabwärts des Einlassauswahlelements (110) und stromaufwärts des Auslasses (103) angeordnet ist;
einen ersten Fluiddurchlass (121) in Fluidverbindung mit dem ersten Einlass (101); und
einen zweiten Fluiddurchlass (122) in Fluidverbindung mit dem zweiten Einlass (102),
wobei der erste Fluiddurchlass (121) in Fluidverbindung mit dem Reglerhohlraum (130) steht, wenn das Einlassauswahlelement (110) den ersten Einlass (101) mit dem Auslass (103) verbindet, und der zweite Fluiddurchlass (122) in Fluidverbindung mit dem Reglerhohlraum (130) steht, wenn das Einlassauswahlelement (110) den zweiten Einlass (102) mit dem Auslass (103) verbindet,
wodurch, wenn sich ein Differenzdruckregler (200) in dem Reglerhohlraum (130) befindet, ein konstanter Differenzdruck über das Einlassauswahlelement (110) aufrechterhalten werden kann.

2. Steuerventil gemäß Anspruch 1, ferner umfassend einen Differenzdruckregler (200), der in dem Reglerhohlraum (130) angeordnet ist.

3. Steuerventil (100) nach einem der vorhergehenden Ansprüche, ferner umfassend einen dritten Fluiddurchlass (123) in Fluidverbindung mit dem Reglerhohlraum (130).

4. Steuerventil (100) gemäß Anspruch 3, ferner umfassend einen Druckabscheider (300), wobei der Druckabscheider (300) zwischen einer Position, die eine Fluidverbindung zwischen dem ersten Fluiddurchlass (121) und dem dritten Fluiddurchlass (123) herstellt, und einer anderen Position, die eine Fluidverbindung zwischen dem zweiten Fluiddurchlass (122) und dem dritten Fluiddurchlass (123) herstellt, bewegbar ist.

5. Steuerventil (100) gemäß Anspruch 4, wobei der Druckabscheider (300) und das Einlassauswahlelement (110) so miteinander verbunden sind, dass sich der Druckabscheider (300) und das Einlassauswahlelement (110) übereinstimmend bewegen.

6. Steuerventil (100) gemäß Anspruch 4 oder 5, wobei der Druckabscheider (300) ein im Wesentlichen zylindrisches Element (303) ist, das drehbar in einem im Wesentlichen zylindrischen Hohlraum (301, 302) des Steuerventils (100) angeordnet ist.

7. Steuerventil (100) gemäß Anspruch 6, wobei der erste Fluiddurchlass (121), der zweite Fluiddurchlass (122) und der dritte Fluiddurchlass (123) mit dem zylindrischen Hohlraum (301, 302) an unterschiedlichen radialen Positionen des zylindrischen Hohlraums (301, 302) verbunden sind.

8. Steuerventil (100) gemäß Anspruch 7, wobei der Druckabscheider (300) eine erste Kammer (301) umfasst, die sich um einen Teil des Umfangs erstreckt, der bei Drehung des Druckabscheiders (300) entweder den ersten Fluiddurchlass (121) oder den zweiten Fluiddurchlass (122) in Fluidverbindung mit dem dritten Fluiddurchlass (123) bringt.

9. Steuerventil (100) gemäß Anspruch 7 oder 8, wobei der Druckabscheider (300) umfasst:
einen im Wesentlichen zylindrischen Körper (303) mit einer Längsachse;
einen ersten Ring (310), der sich um den Umfang des zylindrischen Körpers (303) erstreckt, wobei der erste Ring (310) eine Mittelachse aufweist, die im Wesentlichen parallel zur Längsachse verläuft;
einen zweiten Ring (320), der sich um den Umfang des zylindrischen Körpers (303) erstreckt, wobei der zweite Ring (320) eine Mittelachse aufweist, die im Wesentlichen parallel zur Längsachse verläuft; und
einen dritten Ring (330), der sich um den Umfang des zylindrischen Körpers (303) erstreckt, wobei der dritte Ring (330) den ersten Ring (310) und den zweiten Ring (320) berührt,
wobei der erste, zweite und dritte Ring (310, 320, 330) zwei Druckkammern (301, 302) definieren, die durch den dritten Ring (330) getrennt sind.

10. Steuerventil (100) gemäß Anspruch 9, wobei der erste Fluiddurchlass (121) mit dem zylindrischen Hohlraum (301, 302) in einer ersten Höhe des zylindrischen Hohlraums (301, 302) verbunden ist und der zweite Fluiddurchlass (122) mit dem zylindrischen Hohlraum (301, 302) in einer zweiten Höhe des zylindrischen Hohlraums (301, 302) verbunden ist, wobei die erste und die zweite Höhe voneinander verschieden sind, und
wobei der dritte Fluiddurchlass (123) mit dem zylindrischen Hohlraum in einer Höhe des zylindrischen Hohlraums (301, 302) zwischen der ersten Höhe und der zweiten Höhe verbunden ist.

11. Steuerventil (100) gemäß einem der vorhergehenden Ansprüche, ferner umfassend:
einen Rückflusseinlass (403), der dazu eingerichtet ist, mit der Vorrichtung verbunden zu werden, um ein aus der Vorrichtung zurückfließendes Fluid zu empfangen;
einen ersten Rückflussauslass (401), der dazu eingerichtet ist, mit dem ersten Fluidabfluss verbunden zu werden;
einen zweiten Rückflussauslass (402), der dazu eingerichtet ist, mit dem zweiten Fluidabfluss verbunden zu werden; und
ein Rückflussauslassauswahlelement (410), das stromaufwärts des ersten und des zweiten Rückflussauslasses (401, 402) und stromabwärts des Rückflusseinlasses (403) angeordnet ist, wobei das Rückflussauslassauswahlelement (410) zwischen einer ersten Position, in der der erste Rückflussauslass (401) in Fluidverbindung mit dem Rückflusseinlass (403) steht, und einer zweiten Position, in der der zweite Rückflussauslass (402) in Fluidverbindung mit dem Rückflusseinlass (403) steht, bewegbar ist.

12. Steuerventil (100) gemäß Anspruch 11, wobei das Rückflussauslassauswahlelement (410) mit dem Einlassauswahlelement (110) so verbunden ist, dass sich das Rückflussauslassauswahlelement (410) und das Einlassauswahlelement (110) übereinstimmend bewegen.

## Revendications

1. Vanne (100) de commande destinée à réguler sélectivement un écoulement de fluide vers un dispositif, tel qu'un convecteur de chauffage ou de refroidissement, ladite vanne (100) de commande comportant :
une première entrée (101) prévue pour être reliée à une première source de fluide ;
une deuxième entrée (102) prévue pour être reliée à une deuxième source de fluide ;
une sortie (103) prévue pour être reliée au dispositif ; un élément (110) de sélection d'entrée disposé en aval de la première et de la deuxième entrées (101, 102) et en amont de la sortie (103), ledit élément (110) de sélection d'entrée étant mobile entre une première position dans laquelle la première entrée (101) est en communication fluidique avec la sortie (103) et une deuxième position dans laquelle la deuxième entrée (102) est en communication fluidique avec la sortie (103) ; **caractérisée en ce qu'**elle comporte en outre :
une cavité (130) de régulateur prévue pour loger un régulateur (200) de pression différentielle, ladite cavité (130) de régulateur étant disposée en aval de l'élément (110) de sélection d'entrée et en amont de la sortie (103) ;
un premier passage (121) de fluide en communication fluidique avec la première entrée (101) ; et
un deuxième passage (122) de fluide en communication fluidique avec la deuxième entrée (102),
le premier passage (121) de fluide étant en communication fluidique avec la cavité (130) de régulateur lorsque l'élément (110) de sélection d'entrée relie la première entrée (101) à la sortie (103) et le deuxième passage (122) de fluide étant en communication fluidique avec la cavité (130) de régulateur lorsque l'élément (110) de sélection d'entrée relie la deuxième entrée (102) à la sortie (103),
une pression différentielle constante pouvant ainsi être maintenue à travers ledit élément (110) de sélection d'entrée, lorsqu'un régulateur (200) de pression différentielle est situé dans ladite cavité (130) de régulateur.

2. Vanne de commande selon la revendication 1, comportant en outre un régulateur (200) de pression différentielle disposé dans ladite cavité (130) de régulateur.

3. Vanne (100) de commande selon l'une quelconque des revendications précédentes, comportant en outre un troisième passage (123) de fluide en communication fluidique avec la cavité (130) de régulateur.

4. Vanne (100) de commande selon la revendication 3, comportant en outre un séparateur (300) de pression, ledit séparateur (300) de pression étant mobile entre une position qui établit une communication fluidique entre le premier passage (121) de fluide et le troisième passage (123) de fluide, et une autre position qui établit une communication fluidique entre le deuxième passage (122) de fluide et le troisième passage (123) de fluide.

5. Vanne (100) de commande selon la revendication 4, le séparateur (300) de pression et l'élément (110) de sélection d'entrée étant liés l'un à l'autre de telle façon que le séparateur (300) de pression et l'élément (110) de sélection d'entrée se déplacent ensemble.

6. Vanne (100) de commande selon la revendication 4 ou 5, le séparateur (300) de pression étant un élément sensiblement cylindrique (303) disposé de façon pivotante dans une cavité sensiblement cylindrique (301, 302) de la vanne (100) de commande.

7. Vanne (100) de commande selon la revendication 6, le premier passage (121) de fluide, le deuxième passage (122) de fluide et le troisième passage (123) de fluide se raccordant à la cavité cylindrique (301, 302) à des positions radiales différentes de la cavité cylindrique (301, 302).

8. Vanne (100) de commande selon la revendication 7, le séparateur (300) de pression comportant une première chambre (301) s'étendant autour d'une partie de la circonférence qui, suite à une rotation du séparateur (300) de pression, place soit le premier passage (121) de fluide soit le deuxième passage (122) de fluide en communication fluidique avec le troisième passage (123) de fluide.

9. Vanne (100) de commande selon la revendication 7 ou 8, le séparateur (300) de pression comportant :
un corps sensiblement cylindrique (303) doté d'un axe longitudinal ;
une première bague (310) s'étendant autour de la circonférence du corps cylindrique (303), ladite première bague (310) présentant un axe central qui est sensiblement parallèle à l'axe longitudinal ;
une deuxième bague (320) s'étendant autour de la circonférence du corps cylindrique (303), ladite deuxième bague (320) présentant un axe central qui est sensiblement parallèle à l'axe longitudinal ; et
une troisième bague (330) s'étendant autour de la circonférence du corps cylindrique (303), ladite troisième bague (330) touchant la première bague (310) et la deuxième bague (320),
les première, deuxième et troisième bagues (310, 320, 330) définissant ainsi deux chambres (301, 302) à pression séparées par la troisième bague (330).

10. Vanne (100) de commande selon la revendication 9, le premier passage (121) de fluide se raccordant à la cavité cylindrique (301, 302) à une première hauteur de la cavité cylindrique (301, 302), et le deuxième passage (122) de fluide se raccordant à la cavité cylindrique (301, 302) à une deuxième hauteur de la cavité cylindrique (301, 302), lesdites première et deuxième hauteurs étant différentes l'une de l'autre, et le troisième passage (123) de fluide se raccordant à la cavité cylindrique à une hauteur de la cavité cylindrique (301, 302) comprise entre la première hauteur et la deuxième hauteur.

11. Vanne (100) de commande selon l'une quelconque des revendications précédentes, comportant en outre :
une entrée (403) d'écoulement de retour prévue pour être reliée au dispositif afin de recevoir un fluide revenant du dispositif ;
une première sortie (401) d'écoulement de retour prévue pour être reliée à la première vidange de fluide ;
une deuxième sortie (402) d'écoulement de retour prévue pour être reliée à la deuxième vidange de fluide ; et
un élément (410) de sélection de sortie de retour disposé en amont de la première et de la deuxième sortie (401, 402) d'écoulement de retour et en aval de l'entrée (403) d'écoulement de retour, ledit élément (410) de sélection de sortie de retour étant mobile entre une première position dans laquelle la première sortie (401) d'écoulement de retour est en communication fluidique avec l'entrée (403) d'écoulement de retour, et une deuxième position dans laquelle la deuxième sortie (402) d'écoulement de retour est en communication fluidique avec l'entrée (403) d'écoulement de retour.

12. Vanne (100) de commande selon la revendication 11, l'élément (410) de sélection de sortie de retour étant lié à l'élément (110) de sélection d'entrée de telle façon que l'élément (410) de sélection de sortie de retour et l'élément (110) de sélection d'entrée se déplacent ensemble.
